# EUROPEAN PATENT SPECIFICATION

(11) **EP 3 831 468 B1**
(45) Date of publication and mention of the grant of the patent: **15.11.2023**
(21) Application number: 19306565.3
(22) Date of filing: 04.12.2019
(51) Int. Cl.: B01D 61/58, C02F 1/44, C02F 1/68

(54) **INSTALLATION AND PROCESS FOR PROVIDING MINERALIZED DRINKING WATER**
ANLAGE UND VERFAHREN ZUR BEREITSTELLUNG VON MINERALISIERTEM TRINKWASSER
INSTALLATION ET PROCÉDÉ DE FOURNITURE D'EAU POTABLE MINÉRALISÉE

(43) Date of publication of application: 09.06.2021
(73) Proprietor: Suez International, 92040 Paris La Défense Cedex (FR)
(72) Inventor: PHILIBERT, Marc, 92040 Paris La Défense (FR); FILLOUX, Emmanuelle, 92040 Paris La Défense (FR); GARRIOU, Christian, 92040 Paris La Défense (FR); STEINMANN, Delphine, 92040 Paris La Défense (FR); CIPOLLINA, Andrea, 90138 Palermo (IT)
(74) Representative: IPAZ

(56) References cited:
- WO-A1-2019/197505
- LI WEIYI ET AL: "A novel hybrid process of reverse electrodialysis and reverse osmosis for low energy seawater desalination and brine management", APPLIED ENERGY, ELSEVIER SCIENCE PUBLISHERS, GB, vol. 104, 24 December 2012 (2012-12-24), pages 592-602, XP028982577, ISSN: 0306-2619, DOI: 10.1016/J.APENERGY.2012.11.064
- YING MEI ET AL: "Recent developments and future perspectives of reverse electrodialysis technology: A review", DESALINATION., vol. 425, 1 January 2018 (2018-01-01), pages 156-174, XP055695912, NL ISSN: 0011-9164, DOI: 10.1016/j.desal.2017.10.021

## Description

### FIELD OF THE INVENTION

The present invention pertains to a process for providing decontaminated and mineralized drinking water from polluted fresh water. It further pertains to an installation for providing decontaminated and mineralized drinking water from polluted fresh water.

### TECHNICAL BACKGROUND

Reverse osmosis treatment is one of the most widely used process for preparing drinking water from sea water, and its use for treating contaminated surface or ground water is considered. Reverse osmosis treatment is known to generate water characterized by a very low mineral content, known as "permeate". Said water is corrosive and aggressive and therefore leads to damages to pipes and plumbing. Said weakly mineralized water is furthermore not suitable for drinking and its taste is unpleasant.

Several processes for re-mineralizing water obtained from reverse osmosis treatment are known and used. Most often, the water obtained downstream reverse osmosis treatment is contacted with a filter comprising a limestone media. Limestone progressively dissolves within said water. As a result water gets progressively stable regarding its mineral content. This process requires the presence of a solid material which source might be remote from the water treatment facility, this re-mineralizing process therefore generates additional operating costs to water processing.

Re-mineralized water may also be obtained by adding lime and injecting COz to water with low mineral content. However, this process generates some turbidity. Moreover the production of lime, from lime milk, is operationally complex. As a result, this process is never used in practice as a final step in the production of drinkable water.

Other possible ways to re-mineralize water with low mineral content include the injection of solutions of calcium chloride (CaCl₂) or calcium hydrogenocarbonate (Ca(HCO₃)₂). Practically, said solutions are uneasy to produce and therefore are not used in water treatment facilities.

The presence in fresh waters of micro-pollutants and of various organic matters, including dissolved organic carbon, is a growing public health problem which is under influence of growing population, farming and industry. Progress in laboratory testing highlights their growing presence in aquatic environment and their toxic effect, even at very low concentrations.

There is therefore a need for a process able to generate drinking water from polluted fresh water, wherein said drinking water is decontaminated and exhibits a mineral content appropriate for human and animal consumption; in particular said mineralized water is characterized by acceptable total dissolved solids (TDS), conductivity and hardness.

Electrodialysis is commonly used to demineralize brackish or marine water. A desalination process of seawater is known, wherein reverse electrodialysis is applied to seawater prior to reverse osmosis process. CN204434403 discloses a water recycling system wherein a reverse electrodialysis system is located upstream a reverse osmosis system, said reverse electrodialysis system first reduces the salt content of water to be treated by a reverse osmosis unit.

A process comprising successive steps of reverse osmosis and of electrodialysis metathesis (EDM) is also already known, wherein a source feed water is sent to a reverse osmosis treatment, concentrated salts rejected by the reverse osmosis are fed to an electrodialysis metathesis and sodium chloride solution is injected to said electrodialysis metathesis unit. In said process, metathesis consists of switching partners between ions from the reverse osmosis brine and said feed sodium chloride stream, mixed sodium salts and mixed chloride salts are finally produced. Alternatively, sodium chloride and sodium sulfate are injected to said electrodialysis metathesis, and mixed sodium salts and mixed chloride salts are finally produced.

A process for eliminating micro-pollutants from urine and comprising the successive steps of microfiltration, electrodialysis and ozonation is disclosed *("*Lutte à la source pour la rétention de micropolluants dans les eaux", L. Rossi et al, TSM N°4, 2009).

The combination of reverse osmosis and reverse electrodialysis is known from documents such as WO 2019/197505A1 and LI WEIYI ET AL: "A novel hybrid process of reverse electrodialysis and reverse osmosis for low energy seawater desalination and brine management", Applied Energy, Elsevier Science Publishers, Vol. 104, 24 December 2012, pages 592-602. These documents do not use this combination for the purpose of water remineralization.

### SUMMARY OF THE INVENTION

The inventors have now developed a water treatment installation for providing mineralized and decontaminated drinking water from fresh water potentially containing undesirable material such as organic material and micro-pollutants, said water treatment installation comprising at least one reverse osmosis (RO) unit and one reverse electrodialysis (RED) unit, wherein said at least one reverse osmosis unit is installed upstream of said at least one reverse electrodialysis unit.

The inventors have also developed a process comprising at least one reverse osmosis step and at least one reverse electrodialysis step, wherein said at least one reverse osmosis step is followed by said at least one reverse electrodialysis step.

The present invention therefore provides a water treatment installation and a process for re-mineralizing low-minerals water generated from reverse osmosis treatment of fresh water, wherein any potential undesirable material is eliminated from said fresh water. A water treatment installation and a process of the invention allow desirable minerals, including monovalent and divalent ions, in particular calcium (Ca²⁺), magnesium (Mg²⁺), bicarbonate (HCO₃⁻), and carbonate (CO₃²⁻), to be brought back at an acceptable level in the permeate water produced by a reverse osmosis unit, without any re-contamination of said water.

A water treatment installation and a process according to the invention are simple and reliable, they do not require the addition of any external solid medium or solution, and therefore limit costs and drawbacks associated with these additional media and/or solutions. A water treatment installation and a process according to the invention generate drinking mineralized water exhibiting acceptable levels of ions, in particular acceptable levels of Ca²⁺, Mg²⁺, HCO₃⁻ and CO₃²⁻.

In a first aspect, the present invention relates to a water treatment installation for providing mineralized and decontaminated drinking water, said installation comprising at least:
- a reverse osmosis unit comprising at least:
   ∘ a first inlet to bring in fresh water comprising ions and potentially micropollutants,
   ∘ a first outlet of a first permeate,
   ∘ a second outlet of a first retentate,
- a reverse electrodialysis unit comprising at least:
   ∘ a second inlet connected to said first outlet,
   ∘ a third inlet connected to said second outlet,
   ∘ a third outlet of a first effluent, said first effluent comprising at least a part of said first permeate and at least a part of ions from said first retentate,
   ∘ a fourth outlet of a second effluent comprising at least a part of said potential micropollutants and a part of said first retentate;
wherein said reverse electrodialysis unit is an assisted reverse electrodialysis unit.

According to non-limiting embodiments, a water treatment installation of the invention may further comprise one or more of the following additional characteristics:
- the installation further comprises an additional reverse osmosis unit, said reverse osmosis unit comprising at least:
   ∘ a fourth inlet connected to said second outlet,
   ∘ a fifth outlet of a second permeate, connected to said second inlet,
   ∘ a sixth outlet of a second retentate, connected to said third inlet or to a sixth inlet,
- a filtration unit, preferably a microfiltration, an ultrafiltration or a nanofiltration unit, connected to said first inlet, wherein said filtration unit removes particles from water to be treated by reverse osmosis, a person skilled in the art is able to choose among microfiltration, ultrafiltration and nanofiltration according the size of particles to be removed,
- a filtration unit, preferably a microfiltration, an ultrafiltration or a nanofiltration unit, connected to said third outlet,
- a filtration unit, preferably a microfiltration, an ultrafiltration or a nanofiltration unit, connected to said fourth outlet,
- a separation unit connected to said second outlet of said first retentate, said separation unit provides a chemical, physical or gravitational separation on said first retentate and therefore raises the quality of the final effluent from an installation according to the invention, said separation unit is preferably a microfiltration, an ultrafiltration or a nanofiltration unit,
- a bypass unit comprising at least:
   ∘ a fifth inlet connected to said first outlet and/or to said fifth outlet,
   ∘ a seventh outlet connected to said third outlet,
      wherein said bypass unit is able to adopt one of the following positions:
      ▪ a first position wherein said first outlet and/or said fifth outlet is connected to said second inlet,
      ▪ a second position wherein said first outlet and/or said fifth outlet is connected to said fifth inlet, and said seventh outlet is connected to said third outlet ;
- a recirculation loop between said fourth outlet and said third inlet, which leads to at least one additional reverse electrodialysis treatment of the effluent of the first compartment of said reverse electrodialysis;
- an electrodialysis metathesis unit comprising at least:
   ∘ a sixth inlet connected to said second outlet or to said sixth outlet,
   ∘ an eighth outlet connected to said third inlet and
   ∘ a ninth outlet.
- a control loop comprising at least one sensor of a physical or chemical parameter of the first effluent of said 3^{rd} outlet, in order to better control the process and the quality of said first effluent, in particular ion and micropollutant concentration, said sensor being connected to said third outlet.

According to the present invention, "drinking water" designates water that can be drunk without any danger by human and animals and therefore complies with official requirements regarding its minerals concentration and the presence of potential pollutants or harmful components. In France, mineral concentration requirements are cited in « Arrêté du 11 janvier 2007 relatif aux limites et références de qualité des eaux brutes et des eaux destinées à la consommation humaine mentionnées aux articles R. 1321-2, R. 1321-3, R. 1321-7 et R. 1321-38 du code de la santé publique ».

As an example, according to standardized values in France, mineralized drinking water is characterized as follows:
- TDS (Total Dissolved Solids) measures the dissolved combined content of all inorganic and organic substances present in water in molecular, ionized, or micro-granular (colloidal sol) suspended form,
- conductivity at 25°C: between 2 and 1100 µS/cm
- hardness: expressed in French degrees (f or f_{H}) wherein 1 French degree defines the hardness of a solution of CaCO₃ at a concentration of 10 mg/ml or of 0,0001 mol/L of CaCO₃; (f), superior to 7°f
- pH: between 6,5 and 9.

More particularly, the acceptable mineral content of drinking water can be defined as below:

| | Acceptable level |
|---|---|
| Chloride | <250 mg/L |
| Sulfates | <250 mg/L |
| sodium | <200 mg/L |
| Nitrates | <50 mg/L |
| Nitrites | <0,5 mg/L |

For the purpose of the present invention, "fresh or brackish water" refers to water characterized by less than 30,000 part per million (ppm) of dissolved salts. Fresh water is characterized by a salinity inferior to 500 ppm and brackish water is characterized by a salinity from 500 to 30,000 ppm. The salinity of seawater is superior to 30,000 ppm and includes a high proportion of sodium chloride.

"Fresh or brackish water" refers to surface water, such as for example water from rivers, lakes and dams, to ground water, and to any effluent from an installation or a facility, such as waste water.

By "micropollutants" it is intended any organic or mineral substance with a potentially negative effect on the natural environment and/or organisms. Mineral micropollutants include metals, metalloids and radioactive elements such as lead, cadmium, mercury, arsenic, antimony, radon and uranium. Organic micropollutants include pesticides, hydrocarbons, solvents, detergents, cosmetics and medicinal substances. These contaminants can be found in very low concentration in water (microgram or nanogram per litre).

By "reverse osmosis" it is meant a process, or a unit, using partially permeable membrane wherein a pressure is applied to overcome osmotic pressure. Reverse osmosis uses semipermeable membrane and high pressure to produce a clean permeate, consisting of demineralized or low mineralized water, and a retentate solution containing salts and ions, including heavy metals, and potential pollutants and micropollutants, said retentate being retained on the pressurized side of the membrane. Reverse osmosis membranes are chosen so that their cut-off thresholds are suited to the size and weight of compounds to be trapped.

By "reverse electrodialysis" it is intended a process, or a unit, wherein the concentration gradient between two solutions is used to move ionized salts through ion exchange membrane. When assisted, the process is coadjuvated by an electrical power applied to enhance the passage of ions. In a particular embodiment, reverse electrodialysis is continuous reverse electrodialysis. Salted solution and demineralized or low mineralized water are let through a stack of alternating cation and anion exchange membranes. A person skilled in the art can easily select cation and anion exchange membranes for an installation according to the invention, according to the water to be treated and according to the known membranes electrochemical and physical properties, in particular their known selectivity for monovalent and divalent anions and cations and for micropollutants. By "reverse electrodialysis" it is meant a simple reverse electrodialysis, which is performed without any addition of ions and without any step of switching ions as in reverse electrodialysis metathesis.

In a second aspect, the present invention relates to a process for providing mineralized and decontaminated drinking water, said process comprising:
- i) a first step of providing fresh or brackish water containing ions and potentially containing micropollutants,
- ii) a second step of treating said fresh or brackish water by reverse osmosis to obtain a retentate and a permeate, wherein said retentate is enriched in ions and in said potential micropollutants, and in said permeate ionic concentration is lowered and micropollutants are absent or present in a very small concentration, acceptable for drinking water,
- iii) a third step of treating the retentate and the permeate of said second step by reverse electrodialysis, wherein at least a portion of ions from said retentate is extracted and transferred to said permeate, and
- iv) a fourth step of recovering mineralized water out of said third step.

According to non-limiting embodiments, a process according to the invention may further comprise one or more of the following additional characteristics:
- the reverse electrodialysis is short-cut reverse electrodialysis or is assisted reverse electrodialysis,
- the reverse electrodialysis is assisted reverse electrodialysis and the process further comprises applying an electric voltage superior to a predetermined level to an assisted reverse electrodialysis unit,
- the second step comprises a single reverse osmosis treatment, or a primary reverse osmosis treatment followed by an additional reverse osmosis treatment of the retentate of said primary reverse osmosis treatment, wherein the presence of said additional reverse osmosis treatment leads to a higher quantity of permeate, which consists of demineralized water and/or of depolluted water, the higher ion concentration in the retentate helps to raise the efficiency of the electrodialysis step and potentially allows a lower size of an installation according to the invention,
- the third step comprises:
   ∘ the injection of the retentate of the reverse osmosis of the second step ii) to a first compartment of a reverse electrodialysis unit, wherein said retentate is the retentate of a single reverse osmosis or the retentate of an additional reverse osmosis,
   ∘ the injection of the permeate of the reverse osmosis of the second step ii) to a second compartment of a reverse electrodialysis unit, wherein said permeate is the permeate of a single reverse osmosis or the permeate of an additional reverse osmosis,
   ∘ wherein said retentate and said permeate are injected as parallel fluxes in said reverse electrodialysis unit, and wherein the pressure applied to said first compartment is inferior to the pressure applied to said second compartment,
- a filtration step, preferably a microfiltration, an ultrafiltration or a nanofiltration, of fresh or brackish water upstream of said single or primary reverse osmosis treatment,
- a filtration step, preferably a microfiltration, an ultrafiltration or a nanofiltration, of the mineralized water of the first effluent (E1) recovered from said fourth step iv) and/or comprises
- a filtration step, preferably a microfiltration, an ultrafiltration or a nanofiltration step, of the second effluent (E2) potentially comprising micropollutants, recovered from said fourth step iv),
- a separation step of the retentate recovered from said reverse osmosis step of step ii), said retentate being from said single reverse osmosis step or from said additional reverse osmosis step, said separation step providing a chemical, physical or gravitational separation on said first retentate and therefore raises the quality of the final effluent from an installation according to the invention, said separation step being preferably a microfiltration, an ultrafiltration or a nanofiltration step,
- a bypass step of said reverse electrodialysis step, wherein at least part of the permeate of said reverse osmosis step is added to the effluent of said reverse electrodialysis step; the presence of said bypass unit allows to divert at least a part of said permeate, therefore said diverted part of the permeate is not treated by electrodialysis and consequently is not re-mineralized; depending on the retentate concentration passing through the reverse electrodialysis unit, it may be quicker and cheaper in a process according to the invention to transfer a high concentration of salts in the permeate then to dilute said permeate with the part of permeate which went through said bypass unit,
- a recirculation step wherein at least one additional treatment by electrodialysis of the effluent of the first compartment of said reverse electrodialysis is performed,
- a step of electrodialysis metathesis of the retentate of said reverse osmosis of the second step ii), wherein said retentate is the retentate of said single reverse osmosis or the retentate of said additional reverse osmosis; said electrodialysis metathesis step being an electrodialysis step performed on an electrodialysis unit comprising a specific layout of membranes exhibiting a specific ion selectivity, the presence of said electrodialysis metathesis step enhances the recovery process of said reverse osmosis and therefore allows to obtain a retentate exhibiting a higher ionic concentration and consequently a higher permeate volume, finally the presence of electrodialysis metathesis leads to a higher efficiency of a process and an installation according to the invention,
- a step of monitoring the physicochemical properties of mineralized water recovered from said third outlet in said step iv) and the presence of potential organic material or micropollutants, by use of at least one appropriate sensor, said sensor is preferably chosen among : a conductivity meter, a spectrophotometer, a pH meter, a thermometer and/or a flow meter, the presence of said sensor allows to control of the re-mineralization of the permeate and the determination of the potential presence of organic and micropollutant elements in said mineralized water recovered from step iv), it also allows to determine the mineralization of said water.

Characteristics, advantages and uses of the subject-matter of the present invention are more detailed hereunder, in an illustrated and non-limiting way. When present, the disclosure of the ranges expressed as "from ... to ..." mean that the limits are included in said ranges.

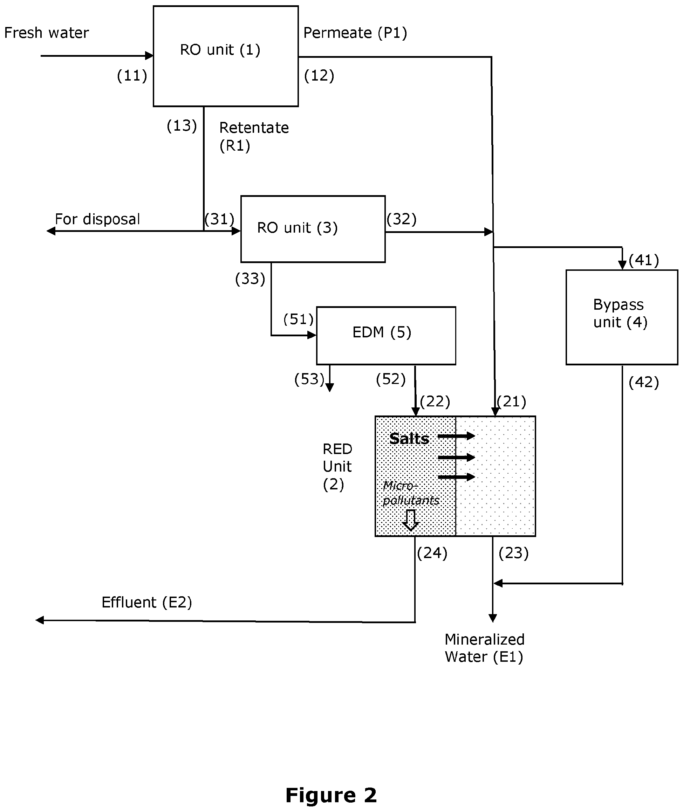

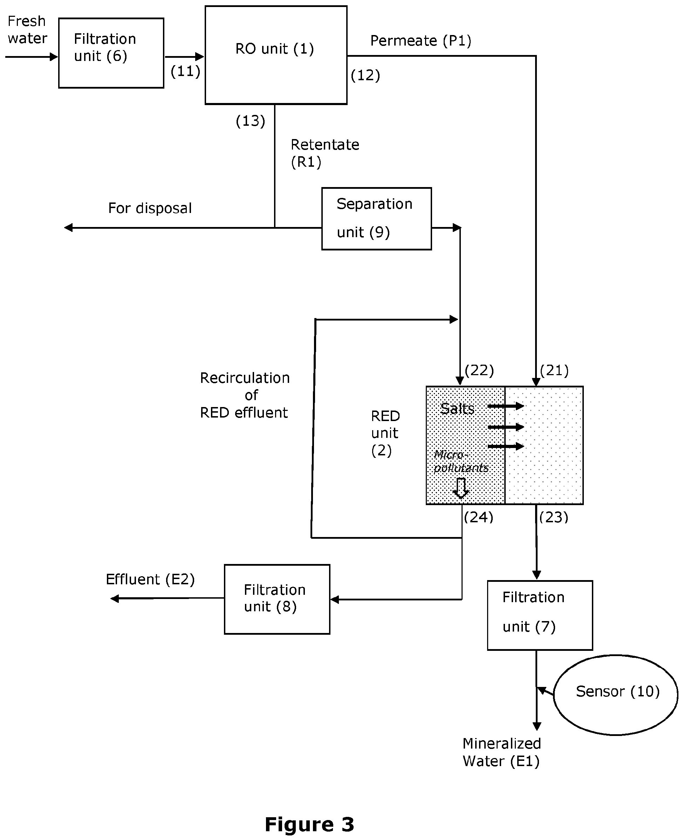

The following embodiments of a water treatment installation and of a process according to the invention comprise several different elements that may be combined with each other, provided that, according to a person skilled in the art, there is no technical incompatibility between said combined elements. Any of the elements from Figures 2 and 3 can therefore be combined in a water treatment installation and in a process according to the invention.
Figure 1 is a schematic representation of a first embodiment of a water treatment installation according to the invention, which represents the simpler embodiment of said installation.
Figure 2 is a schematic representation of a second embodiment of an installation according to the invention.
Figure 3 is a schematic representation of a third embodiment of an installation according to the invention.

### DETAILED DESCRIPTION OF THE INVENTION

In a first aspect, the present invention relates to a water treatment installation for providing mineralized and decontaminated drinking water, said installation comprising at least:
- a reverse osmosis unit (1) comprising at least:
   ∘ a first inlet (11) to bring in fresh or brackish water comprising ions and potentially micropollutants,
   ∘ a first outlet (12) of a first permeate (P1),
   ∘ a second outlet (13) of a first retentate (R1),
- a reverse electrodialysis unit (2) comprising at least:
   ∘ a second inlet (21) connected to said first outlet (12),
   ∘ a third inlet (22) connected to said second outlet (13),
   ∘ a third outlet (23) of an effluent (E1), said effluent comprising at least a part of said first permeate (P1) and at least a part of ions from said first retentate (R1),
   ∘ a fourth outlet (24) of a second effluent (E2) comprising at least a part of said potential micropollutants and a part of said first retentate (R1).

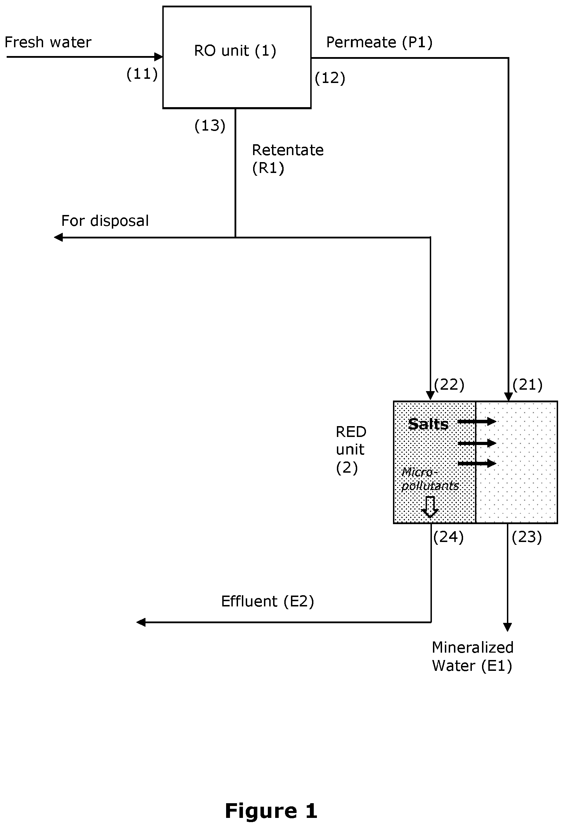

Figure 1 illustrates a first embodiment of an installation according to the invention, wherein said installation comprises a single reverse osmosis unit (1) and a reverse electrodialysis (3) unit.

The water treatment installation of the invention comprises an assisted reverse electrodialysis unit.

In a second embodiment, a water treatment installation according to the invention comprises a primary reverse osmosis unit (1) and an additional reverse osmosis unit (3), and a reverse electrodialysis unit (2) as illustrated in Figure 2, said additional reverse osmosis unit comprising at least:
∘ a fourth inlet (31) connected to said second outlet (13),
∘ a fifth outlet (32) of a second permeate, connected to said second inlet (21),
∘ a sixth outlet (33) of a second retentate (R2), connected to said third inlet (22) or to a sixth inlet (51).

The presence of an additional reverse osmosis unit raises the mineral concentration of the retentate to be treated by the reverse electrodialysis unit and therefore leads to a better efficiency of said reverse electrodialysis unit. The presence of more than one reverse osmosis unit therefore allows a higher level of production of mineralized drinking water.

In a third embodiment of the invention, the installation comprises means for removing suspended matter and/or for adding a sequestrant, provided that said sequestrant is a non-charged sequestrant prior to the contacting of the water with the reverse osmosis membrane.

In another embodiment, a water treatment installation according to the invention comprises, as illustrated in Figure 3:
- a filtration unit (6), preferably a microfiltration, an ultrafiltration or a nanofiltration unit, connected to said first inlet (11), and/or
   and/or
- a filtration unit (7), preferably a microfiltration, an ultrafiltration or a nanofiltration unit, connected to said third outlet (23), in order to raise the purity of the mineralized drinking water generated by said water treatment installation.
- a filtration unit (8), preferably a microfiltration, an ultrafiltration or a nanofiltration unit, connected to said fourth outlet (24), the presence of said filtration unit (8) is intended to protect the environment from contamination by the micropollutant potentially present in the corresponding compartment of said electrodialysis unit.

In another embodiment of the invention, a water treatment installation comprises, as illustrated in Figure 3, a separation unit (9) which provides a physical, chemical or gravitational separation and comprises preferably a microfiltration, an ultrafiltration or a nanofiltration unit, connected to said first outlet (13).

In another particular embodiment, a water treatment installation according to the invention comprises a bypass unit (4), as illustrated in Figure 2, comprising at least:
∘ a fifth inlet (41) connected to said first outlet (12) and/or to said fifth outlet (32),
∘ a seventh outlet (42) connected to said third outlet (23),
wherein said bypass unit is able to adopt one of the following positions:
∘ a first position wherein said first outlet (12) and/or said fifth outlet (32) is connected to said second inlet (21),
∘ a second position wherein said first outlet (12) and/or said fifth outlet (32) is connected to said fifth inlet (41), and said seventh outlet (42) is connected to said third outlet (23).

The presence of said bypass unit (4) diverts at least a fraction of the permeate generated by a reverse osmosis unit (1) or by an additional reverse osmosis unit (3) from the electrodialysis unit, therefore said fraction of the permeate is not re-mineralized in said reverse electrodialysis unit.

Depending on the concentration of minerals of interest in the permeate and/or in the retentate generated by reverse osmosis, a person skilled in the art of providing drinking water determines which fraction, if any, of said permeate should be diverted from the reverse electrodialysis unit, in order for the mineralized water in said effluent (E1) to present an acceptable mineral concentration. The presence of a bypass unit therefore allows to adapt the installation and the process to the water to be treated and leads a quicker and cheaper water treatment process.

In another particular embodiment, a water treatment installation according to the invention comprises an electrodialysis metathesis unit (5), as illustrated in Figure 2, comprising at least:
∘ a sixth inlet (51) connected to said second outlet (13) or to said sixth outlet (33),
∘ an eighth outlet (52) connected to said third inlet (22) and
∘ a ninth outlet (53).

A reverse electrodialysis metathesis unit (5) is defined as a reverse electrodialysis unit comprising a specific combination of ion-selective membranes, which leads to recover a more concentrated retentate and a higher quantity of permeate when compared to a "classical" reverse electrodialysis unit and therefore leads to a better yield rate of a water treatment installation.

In a third embodiment, a water treatment installation according to the invention comprises, as illustrated in Figure 3, a connection between said fourth outlet (24) and said third inlet (22), to allow the recirculation of the RED effluent of the first compartment of said reverse electrodialysis and at least one additional electrodialysis treatment of said RED effluent.

In another embodiment, a water treatment installation according to the invention comprises, as illustrated in Figure 3, at least one sensor (10) connected to said third outlet (23), in order to determine the physicochemical parameters and to detect the potential presence of organic components of said effluent (E1). In a water treatment installation according to the invention, said at least one sensor is chosen among: a conductivity meter, a spectrophotometer, a pH meter, a thermometer and/or a flow meter. In a particular embodiment, UV absorbance is measured; an increase in UV absorbance at a pre-determined level signals the need for membranes cleaning. In another particular embodiment, conductivity is monitored; depending the level of said conductivity, the potential applied to reverse electro-dialysis is adjusted in order to reach the desired properties of effluent (E1).

In a second aspect, the present invention relates to a process for providing mineralized and decontaminated drinking water, said process comprising:
- i) a first step of providing fresh or brackish water containing ions and potentially containing micropollutants,
- ii) a second step of treating said fresh or brackish water by reverse osmosis to obtain a retentate and a permeate, wherein said retentate is enriched in ions and in said potential micropollutants,
- iii) a third step of treating the retentate and the permeate of said second step by reverse electrodialysis, wherein at least a portion of ions from said retentate is extracted and transferred to said permeate, and
- iv) a fourth step of recovering mineralized water out of said third step.

In a reverse electrodialysis step of a process according to the invention, the water flow rate is from 1 to 20 l/hour.

In a particular embodiment of a process according to the invention, at least a portion of ions from said retentate from said reverse osmosis step is extracted and transferred to said permeate, wherein the other part of ions from said retentate is for disposal. A person skilled in the art will determine the fraction of ions from said retentate to be transferred to said permeate, depending on the salinity of the fresh or brackish water to be treated, of the mineralized water to be generated, and of the efficiency of a process according to the invention.

In a particular embodiment of a process according to the invention, the totality of ions from said retentate from said reverse osmosis step is extracted and transferred to said permeate.

In another particular embodiment, a process of the invention comprises a reverse electrodialysis step which is an assisted reverse electrodialysis. More particularly, a process of the invention comprises an assisted reverse electrodialysis wherein an electrical voltage is applied in the direction of the natural salinity gradient, increasing the ionic transport rate. In a particular embodiment of a process according to the invention, an electrical voltage superior to a predetermined level is applied to the reverse electrodialysis unit. The level of said electrical voltage is comprised between 0 and 8 V per cell pair, wherein the number of cell pairs in a reverse electrodialysis unit varies from 5 to 1,000 depending on the unit size.

In a particular embodiment, a process of the present invention comprises a step of reverse osmosis treatment, comprising a single reverse osmosis treatment generating a permeate and a retentate.

In another particular embodiment, said reverse osmosis step comprises a primary reverse osmosis treatment and an additional reverse osmosis treatment of the retentate of said primary reverse osmosis treatment.

In a particular embodiment, a process of the present invention comprises:
- the injection of the retentate of the reverse osmosis of step ii) to a first compartment of a reverse electrodialysis unit, wherein said retentate is the retentate of a single reverse osmosis or the retentate of an additional reverse osmosis, and
- the injection of the permeate of the reverse osmosis of step ii) to a second compartment of a reverse electrodialysis unit, wherein said permeate is the permeate of a single reverse osmosis or the permeate of an additional reverse osmosis,
wherein said retentate and said permeate are injected as parallel fluxes in said reverse electrodialysis unit, and wherein the pressure applied to said first compartment is inferior to the pressure applied to said second compartment.

In a particular embodiment, a process of the present invention also comprises a filtration step, preferably a microfiltration, an ultrafiltration or a nanofiltration, of fresh or brackish water upstream of said reverse osmosis treatment, being either a single or a primary reverse osmosis treatment. A filtration step upstream of reverse osmosis is intended to remove suspended solid material potentially present in said fresh or brackish water. Filtration may be performed by any mean known by a person skilled in the art, such as multimedia filter, activated carbon, bag filter and/or cartridge filter.

In a particular embodiment, a process of the present invention also comprises a filtration step, preferably a microfiltration, an ultrafiltration or a nanofiltration, of the mineralized water recovered in said fourth step iv).

In a particular embodiment, a process of the present invention also comprises a filtration step, preferably a microfiltration, an ultrafiltration or a nanofiltration, of the second effluent (E2) from said fourth outlet (24), wherein said second effluent (E2) comprises at least a part of said potential micropollutants and a part of said first retentate (R1).

In a more particular embodiment, a process of the present invention also comprises:
- a filtration step, preferably a microfiltration, an ultrafiltration or a nanofiltration, of fresh or brackish water upstream of reverse osmosis step and/or
- a filtration step, preferably a microfiltration, an ultrafiltration or a nanofiltration, of the mineralized water of said first effluent (E1) recovered from said step iv) and/or
- a filtration step, preferably a microfiltration, an ultrafiltration or a nanofiltration, of said second effluent (E2) recovered from said step iv).

In another particular embodiment, a process of the present invention also comprises a physical, chemical or gravitational separation step, preferably a filtration, more preferably a microfiltration, an ultrafiltration or a nanofiltration step, of the effluent recovered from said second outlet (13) of said single reverse osmosis unit or from said sixth outlet (33) of said additional reverse osmosis unit.

In another particular embodiment, a process of the present invention further comprises a step of reversing the polarity of said reverse electrodialysis unit, in order to minimize the risk of membranes fouling with colloidal particles potentially present in water to be treated and/or to help the cleaning of said membranes.

In an advantageous embodiment of a process of the invention, the process comprises, prior to the contacting of the water with the reverse osmosis membrane, a step of removing suspended matter, a step of adding a sequestrant, provided that said sequestrant is a non-charged sequestrant.

In another particular embodiment, a process of the present invention comprises a bypass of said electrodialysis step, wherein at least a part of the permeate of said reverse osmosis step is directly added to the effluent of said reverse electrodialysis step, wherein said reverse osmosis is a single reverse osmosis, a primary reverse osmosis and/or an additional reverse osmosis.

In another particular embodiment, a process of the present invention also comprises at least one additional treatment by electrodialysis of the effluent of the first compartment of said reverse electrodialysis. According to this embodiment, the RED effluent comprising salts and potential micropollutants is subject to recirculation and to a further reverse electrodialysis treatment.

In another particular embodiment, a process of the present invention also comprises a step of electrodialysis metathesis treatment of the retentate of said reverse osmosis of step ii), wherein said retentate of said reverse osmosis is a retentate of a single reverse osmosis or the retentate of an additional reverse osmosis. Said electrodialysis metathesis treatment allows, for example, the switching of ions present in the retentate of said RO treatment with sodium and/or chloride, and comprises the addition of an external solution of NaCl.

In another particular embodiment, a process of the present invention also comprises a step of monitoring the physicochemical properties of the obtained mineralized water of said first effluent of said 3^{rd} outlet, and the level of any potential micropollutant and/or organic matter in said mineralized water. Said monitoring or control step is performed via a control loop comprising at least one sensor of a physical or chemical parameter of said water.

The following example illustrates, without limiting it, a water treatment installation and a process according to the invention.

### EXAMPLE:

### Treatment of artificially spiked brine by a process according to the invention

The present example demonstrates the feasibility of a process and a water treatment installation according to the invention for the treatment of fresh and brackish water, possibly artificially spiked with micropollutants.

A brine is artificially spiked with the following micropollutants : isoproturon, carbamazepine, diluron, metoprolol, atenolol, PFOS, PFOA, sulfamethoxazine oxadixyl, caffeine, metolachlor, iopromid, ethidimuron, desthylatrazine, deisopropylatrazine, atrazine, 17-β-estradiol, acetaminophen. Said brine is treated by a process according to the invention and the obtained mineralized water is tested for its mineralization and the concentration of each of said micropollutants.

Brine and brine artificially spiked with micropollutants are treated by a process according to the invention wherein a reverse electrodialysis step is performed for 10 hours, applying a 10 V current (2V per cell pair), with a flow from 3 to 4 liters/hours per cell pair. Mineralized water is obtained and characterized.

The obtained mineralized water is tested for the concentration of bicarbonates, calcium, potassium, magnesium, sodium, chloride, nitrate and sulfate. The hardness and conductivity of said water is determined. Experimental results shows the good mineral quality of water, which hardness is comparable to the hardness of known bottled waters.

The determination of the presence of micropollutants in the mineralized water obtained from a process of the invention shows that, for any spiked micropollutant, from 90% to 100% of said micropollutant is absent from mineralized water. From these experimental results obtained with spiked brine, the predicted concentration of any tested micropollutant in mineralized water obtained from "real" brine is compatible with any standard regulation.

## Claims

1. A water treatment installation for providing mineralized and decontaminated drinking water, said installation comprising at least:
- a reverse osmosis unit (1) comprising at least:
∘ a first inlet (11) to bring in fresh or brackish water comprising ions and potentially micropollutants,
∘ a first outlet (12) of a first permeate (P1),
∘ a second outlet (13) of a first retentate (R1),
- a reverse electrodialysis unit (2) comprising at least:
∘ a second inlet (21) connected to said first outlet (12),
∘ a third inlet (22) connected to said second outlet (13),
∘ a third outlet (23) of a first effluent (E1), said first effluent comprising at least a part of said first permeate (P1) and at least a part of ions from said first retentate (R1),
∘ a fourth outlet (24) of a second effluent (E2) comprising at least a part of said potential micropollutants and a part of said first retentate (R1),
**characterized in that** said reverse electrodialysis unit is an assisted reverse electrodialysis unit.

2. A water treatment installation according to claim 1, said installation comprising an additional reverse osmosis unit (3), said reverse osmosis unit comprising at least:
∘ a fourth inlet (31) connected to said second outlet (13),
∘ a fifth outlet (32) of a second permeate, connected to said second inlet (21),
∘ a sixth outlet (33) of a second retentate (R2), connected to said third inlet (22) or to a sixth inlet (51).

3. A water treatment installation according to any of the preceding claims, said installation comprising:
∘ a filtration unit (6), preferably a nanofiltration unit, connected to said first inlet (11), and/or
∘ a filtration unit (8), preferably a nanofiltration unit, connected to said fourth outlet (24), and/or
∘ a filtration unit (7), preferably a nanofiltration unit, connected to said third outlet (23).

4. A water treatment installation according to any of the preceding claims, said installation comprising a bypass unit (4) comprising at least:
∘ a fifth inlet (41) connected to said first outlet (12) and/or to said fifth outlet (32),
∘ a seventh outlet (42) connected to said third outlet (23),
wherein said bypass unit is able to adopt one of the following positions:
∘ a first position wherein said first outlet (12) and/or said fifth outlet (32) is connected to said second inlet (21),
∘ a second position wherein said first outlet (12) and/or said fifth outlet (32) is connected to said fifth inlet (41), and said seventh outlet (42) is connected to said third outlet (23).

5. A water treatment installation according to any of the preceding claims, said installation comprising a recirculation loop connecting said fourth outlet (24) and said third inlet (22).

6. A water treatment installation according to any of the preceding claims, said installation comprising an electrodialysis metathesis unit (5) comprising at least:
∘ a sixth inlet (51) connected to said second outlet (13) or to said sixth outlet (33),
∘ an eighth outlet (52) connected to said third inlet (22) and
∘ a ninth outlet (53).

7. A water treatment installation according to any of the preceding claims, said installation comprising at least one sensor (10) of the physicochemical parameters of the first effluent (E1) connected to said third outlet (23).

8. Process for providing mineralized and decontaminated drinking water, said process comprising:
- i) a first step of providing fresh or brackish water containing ions and potentially containing micropollutants,
- ii) a second step of treating said fresh or brackish water by reverse osmosis to obtain a retentate (R1) and a permeate (P1), wherein said retentate (R1) is enriched in ions and in said potential micropollutants,
- iii) a third step of treating the retentate (R1) and the permeate (P1) of said second step by reverse electrodialysis, wherein at least a portion of ions from said retentate (R1) is extracted and transferred to said permeate (P1), to obtain a first effluent (E1) and a second effluent (E2), and
- iv) a fourth step of recovering mineralized water from said first effluent (E1) of said third step.

9. Process according to claim 8, wherein said reverse electrodialysis is assisted reverse electrodialysis.

10. Process according to claim 9, wherein the process further comprises applying an electric voltage superior to a predetermined level to an assisted reverse electrodialysis unit.

11. Process according to any of claims 8 to 10, wherein said second step comprises: a) a single reverse osmosis treatment or b) a primary reverse osmosis treatment and an additional reverse osmosis treatment of the retentate of said primary reverse osmosis treatment.

12. Process according to any claims 8 to 11, wherein said third step comprises:
- the injection of the retentate of the reverse osmosis of the second step to a first compartment of a reverse electrodialysis unit, wherein said retentate is the retentate of a single reverse osmosis or the retentate of an additional reverse osmosis,
- the injection of the permeate of the reverse osmosis of the second step to a second compartment of a reverse electrodialysis unit, wherein said permeate is the permeate of a single reverse osmosis or the permeate of an additional reverse osmosis,
wherein said retentate and said permeate are injected as parallel fluxes in said reverse electrodialysis unit, and wherein the pressure applied to said first compartment is inferior to the pressure applied to said second compartment.

13. A process according to any of claims 8 to 12, further comprising a filtration step, preferably a nanofiltration, of fresh or brackish water upstream of said single or primary reverse osmosis treatment and/or further comprising a filtration step, preferably a nanofiltration step, of the second effluent (E2), and/or further comprising a filtration step, preferably a nanofiltration step, of the mineralized water recovered from said fourth step.

14. A process according to any of claims 8 to 13, further comprising a bypass step of said electrodialysis step, wherein at least part of the permeate of said reverse osmosis step is added to the first effluent (E1) of said reverse electrodialysis step.

15. A process according to any of claims 8 to 14, further comprising a step of at least one additional treatment by reverse electrodialysis of the second effluent (E2) of said reverse electrodialysis step, wherein said second effluent (E2) recirculates through said reverse electrodialysis unit.

16. A process according to any of claims 8 to 15, further comprising a step of electrodialysis metathesis treatment of the retentate of said reverse osmosis of the second step, wherein said retentate is a retentate of said single reverse osmosis or the retentate of said additional reverse osmosis.

## Patentansprüche

1. Wasseraufbereitungsanlage zur Bereitstellung von mineralisiertem und dekontaminiertem Trinkwasser, wobei die Anlage mindestens Folgendes umfasst:
- eine Umkehrosmose-Einheit (1) mit mindestens:
∘ einem ersten Einlass (11) zum Einleiten von Süß- oder Brackwasser, das Ionen und potentiell Mikroverunreinigungen enthält,
∘ einem ersten Auslass (12) für ein erstes Permeat (P1),
∘ einem zweiten Auslass (13) für ein erstes Retentat (R1),
- eine Umkehr-Elektro-Dialyse-Einheit (2) mit mindestens:
∘ einem zweiten Einlass (21), der mit dem ersten Auslass (12) verbunden ist,
∘ einem dritten Einlass (22), der mit dem zweiten Auslass (13) verbunden ist,
∘ einem dritten Auslass (23) für einen ersten Abstrom (E1), wobei der erste Abstrom mindestens einen Teil des ersten Permeats (P1) und mindestens einen Teil der Ionen des ersten Retentats (R1) enthält,
∘ einem vierten Auslass (24) für einen zweiten Abstrom (E2), der mindestens einen Teil der potentiellen Mikroverunreinigungen und einen Teil des ersten Retentats (R1) enthält,
**dadurch gekennzeichnet, dass**
die Umkehr-Elektro-Dialyse-Einheit eine unterstützte Umkehr-Elektro-Dialyse-Einheit ist.

2. Wasseraufbereitungsanlage nach Anspruch 1, wobei die Anlage eine zusätzliche Umkehrosmose-Einheit (3) umfasst, wobei diese Umkehrosmose-Einheit mindestens Folgendes umfasst:
∘ einen vierten Einlass (31), der mit dem zweiten Auslass (13) verbunden ist,
∘ einen fünften Auslass (32) für ein zweites Permeat, der mit dem zweiten Einlass (21) verbunden ist,
∘ einen sechsten Auslass (33) für ein zweites Retentat (R2), der mit dem dritten Einlass (22) oder einem sechsten Einlass (51) verbunden ist.

3. Wasseraufbereitungsanlage nach einem der vorhergehenden Ansprüche, wobei die Anlage Folgendes umfasst:
∘ eine Filtrations-Einheit (6), vorzugsweise eine Nanofiltrations-Einheit, die mit dem ersten Einlass (11) verbunden ist, und/oder
∘ eine Filtrations-Einheit (8), vorzugsweise eine Nanofiltrations-Einheit, die mit dem vierten Auslass (24) verbunden ist, und/oder
∘ eine Filtrations-Einheit (7), vorzugsweise eine Nanofiltrations-Einheit, die mit dem dritten Auslass (23) verbunden ist.

4. Wasseraufbereitungsanlage nach einem der vorhergehenden Ansprüche, wobei die Anlage eine Bypass-Einheit (4) umfasst, die mindestens Folgendes umfasst:
∘ einen fünften Einlass (41), der mit dem ersten Auslass (12) und/oder mit dem fünften Auslass (32) verbunden ist,
∘ einem siebten Auslass (42), der mit dem dritten Auslass (23) verbunden ist,
wobei die Bypass-Einheit eine der folgenden Positionen einnehmen kann:
∘ eine erste Position, in der der erste Auslass (12) und/oder der fünfte Auslass (32) mit dem zweiten Einlass (21) verbunden ist,
∘ eine zweite Position, in der der erste Auslass (12) und/oder der fünfte Auslass (32) mit dem fünften Einlass (41) verbunden ist, und der siebte Auslass (42) mit dem dritten Auslass (23) verbunden ist.

5. Wasseraufbereitungsanlage nach einem der vorhergehenden Ansprüche, wobei die Anlage eine Rückführschleife umfasst, die den vierten Auslass (24) und den dritten Einlass (22) miteinander verbindet.

6. Wasseraufbereitungsanlage nach einem der vorhergehenden Ansprüche, wobei die Anlage eine Elektrodialyse Metathesis Einheit (5) umfasst, die mindestens Folgendes umfasst:
∘ einen sechsten Einlass (51), der mit dem zweiten Auslass (13) oder mit dem sechsten Auslass (33) verbunden ist,
∘ einen achten Auslass (52), der mit dem dritten Einlass (22) verbunden ist und
∘ einen neunten Auslass (53).

7. Wasseraufbereitungsanlage nach einem der vorhergehenden Ansprüche, wobei die Anlage mindestens einen Sensor (10) für die physikalisch-chemischen Parameter des ersten Abstroms (E1), der mit dem dritten Auslass (23) verbunden ist, umfasst.

8. Verfahren zur Bereitstellung von mineralisiertem und dekontaminiertem Trinkwasser, wobei das Verfahren Folgendes umfasst:
- i) einen ersten Schritt der Bereitstellung von Süß- oder Brackwasser, das Ionen und potentiell Mikroverunreinigungen enthält,
- ii) einen zweiten Schritt der Behandlung des Süß- oder Brackwassers durch Umkehrosmose, um ein Retentat (R1) und ein Permeat (P1) zu erhalten, wobei das Retentat (R1) mit Ionen und den potentiellen Mikroverunreinigungen angereichert ist,
- iii) einen dritten Schritt der Behandlung des Retentats (R1) und des Permeats (P1) des zweiten Schritts durch Umkehr-Elektro-Dialyse, wobei mindestens ein Teil der Ionen aus dem Retentat (R1) extrahiert und zu dem Permeat (P1) überführt wird, um einen ersten Abstrom (E1) und einen zweiten Abstrom (E2) zu erhalten,
und
- iv) einen vierten Schritt der Rückgewinnung von mineralisiertem Wasser aus dem ersten Abstrom (E1) des dritten Schritts.

9. Verfahren nach Anspruch 8, wobei die Umkehr-Elektro-Dialyse eine unterstützte Umkehr-Elektro-Dialyse ist.

10. Verfahren nach Anspruch 9, wobei das Verfahren ferner das Anlegen einer elektrischen Spannung an eine unterstützte Umkehr-Elektro-Dialyse-Einheit umfasst, wobei die Spannung höher als ein vorbestimmter Pegel ist.

11. Verfahren nach einem der Ansprüche 8 bis 10, wobei der zweite Schritt Folgendes umfasst: a) eine einzige Umkehrosmose-Behandlung oder b) eine erste Umkehrosmose-Behandlung und eine zusätzliche Umkehrosmose-Behandlung des Retentats aus der ersten Umkehrosmose-Behandlung.

12. Verfahren nach einem der Ansprüche 8 bis 11, wobei der dritte Schritt Folgendes umfasst:
- Einspritzung des Retentats der Umkehrosmose des zweiten Schritts in eine erste Kammer einer Umkehr-Elektro-Dialyse-Einheit, wobei dieses Retentat das Retentat einer einzigen Umkehrosmose oder das Retentat einer zusätzlichen Umkehrosmose ist,
- Einspritzung des Permeats der Umkehrosmose des zweiten Schritts in eine zweite Kammer einer Umkehr-Elektro-Dialyse-Einheit, wobei dieses Permeat das Permeat einer einzigen Umkehrosmose oder das Permeat einer zusätzlichen Umkehrosmose ist,
wobei das Retentat und das Permeat als parallele Flüsse in die Umkehr-Elektro-Dialyse-Einheit eingespritzt werden, und wobei der Druck, der auf die erste Kammer ausgeübt wird, geringer ist als der Druck, der auf die zweite Kammer ausgeübt wird.

13. Verfahren nach einem der Ansprüche 8 bis 12, das weiterhin einen Filtrationsschritt umfasst, vorzugsweise eine Nanofiltration, von Süß- oder Brackwasser stromaufwärts der einzigen oder ersten Umkehrosmose-Behandlung und/oder das weiterhin einen Filtrationsschritt umfasst, vorzugsweise einen Nanofiltrationsschritt, des zweiten Abstroms (E2) und/oder weiterhin einen Filtrationsschritt umfasst, vorzugsweise einen Nanofiltrationsschritt, des aus dem vierten Schritt zurückgewonnenen mineralisierten Wassers.

14. Verfahren nach einem der Ansprüche 8 bis 13, das weiterhin einen Bypass-Schritt des Elektro-Dialyseschrittes umfasst, wobei mindestens ein Teil des Permeats des Umkehrosmoseschrittes dem ersten Abstrom (E1) des Umkehr-Elektro-Dialyseschrittes zugesetzt wird.

15. Verfahren nach einem der Ansprüche 8 bis 14, das weiterhin einen Schritt mindestens einer zusätzlichen Behandlung durch Umkehr-Elektro-Dialyse des zweiten Abstroms (E2) des Umkehrelektrodialyseschrittes umfasst, wobei der zweite Abstrom (E2) durch die Umkehr-Elektro-Dialyse-Einheit rezirkuliert.

16. Verfahren nach einem der Ansprüche 8 bis 15, das weiterhin einen Schritt der Elektrodialyse Metathesis Behandlung des Retentats der Umkehrosmose des zweiten Schrittes umfasst, wobei dieses Retentat ein Retentat der einzigen Umkehrosmose oder das Retentat der zusätzlichen Umkehrosmose ist.

## Revendications

1. Installation de traitement de l'eau pour fournir de l'eau potable minéralisée et décontaminée, ladite installation comprenant au moins :
- une unité d'osmose inverse (1) comprenant au moins :
o une première entrée (11) pour introduire de l'eau douce ou saumâtre comprenant des ions et potentiellement des micropolluants,
o une première sortie (12) d'un premier perméat (P1),
o une deuxième sortie (13) d'un premier rétentat (R1),
- une unité d'électrodialyse inverse (2) comprenant au moins :
o une deuxième entrée (21) raccordée à ladite première sortie (12),
o une troisième entrée (22) raccordée à ladite deuxième sortie (13),
o une troisième sortie (23) d'un premier effluent (E1), ledit premier effluent comprenant au moins une partie dudit premier perméat (P1) et au moins une partie des ions dudit premier rétentat (R1),
o une quatrième sortie (24) d'un second effluent (E2) comprenant au moins une partie desdits micropolluants potentiels et une partie dudit premier rétentat (R1),
**caractérisée en ce que** ladite unité d'électrodialyse inverse est une unité d'électrodialyse inverse assistée.

2. Installation de traitement de l'eau selon la revendication 1, ladite installation comprenant une unité supplémentaire d'osmose inverse (3), ladite unité d'osmose inverse comprenant au moins :
o une quatrième entrée (31) raccordée à ladite deuxième sortie (13),
o une cinquième sortie (32) d'un second perméat, raccordée à ladite deuxième entrée (21),
o une sixième sortie (33) d'un deuxième rétentat (R2), raccordée à ladite troisième entrée (22) ou à une sixième entrée (51).

3. Installation de traitement de l'eau selon l'une quelconque des revendications précédentes, ladite installation comprenant :
o une unité de filtration (6), de préférence une unité de nanofiltration, raccordée à ladite première entrée (11), et/ou
o une unité de filtration (8), de préférence une unité de nanofiltration, raccordée à ladite quatrième sortie (24), et/ou
o une unité de filtration (7), de préférence une unité de nanofiltration, raccordée à ladite troisième sortie (23).

4. Installation de traitement de l'eau selon l'une quelconque des revendications précédentes, ladite installation comprenant une unité de dérivation (4) comprenant au moins :
o une cinquième entrée (41) raccordée à ladite première sortie (12) et/ou à ladite cinquième sortie (32),
o une septième sortie (42) raccordée à ladite troisième sortie (23),
dans laquelle ladite unité de dérivation est en mesure d'adopter l'une des positions suivantes :
o une première position dans laquelle ladite première sortie (12) et/ou ladite cinquième sortie (32) est raccordée à ladite seconde entrée (21),
o une deuxième position dans laquelle ladite première sortie (12) et/ou ladite cinquième sortie (32) est raccordée à ladite cinquième entrée (41), et ladite septième sortie (42) est raccordée à ladite troisième sortie (23).

5. Installation de traitement de l'eau selon l'une quelconque des revendications précédentes, ladite installation comprenant une boucle de recirculation raccordant ladite quatrième sortie (24) et ladite troisième entrée (22).

6. Installation de traitement de l'eau selon l'une quelconque des revendications précédentes, ladite installation comprenant une unité de métathèse d'électrodialyse (5) comprenant au moins :
o une sixième entrée (51) raccordée à ladite deuxième sortie (13) ou à ladite sixième sortie (33),
o une huitième sortie (52) raccordée à ladite troisième entrée (22) et
o une neuvième sortie (53).

7. Installation de traitement de l'eau selon l'une quelconque des précédentes revendications, ladite installation comprenant au moins un capteur (10) des paramètres physicochimiques du premier effluent (E1) raccordé à ladite troisième sortie (23).

8. Procédé de fourniture d'eau potable minéralisée et décontaminée, ledit procédé comprenant :
- i) une première étape consistant à fournir de l'eau douce ou saumâtre contenant des ions et potentiellement des micropolluants,
- ii) une deuxième étape de traitement de ladite eau douce ou saumâtre par osmose inverse pour obtenir un rétentat (R1) et un perméat (P1), dans laquelle ledit rétentat (R1) est enrichi en ions et en lesdits micropolluants potentiels,
- iii) une troisième étape de traitement du rétentat (R1) et du perméat (P1) de ladite deuxième étape par électrodialyse inverse, dans laquelle au moins une partie des ions dudit rétentat (R1) est extraite et transférée vers ledit perméat (P1), pour obtenir un premier effluent (E1) et un second effluent (E2), et
- iv) une quatrième étape de récupération de l'eau minéralisée de ce premier effluent (E1) de cette troisième étape.

9. Procédé selon la revendication 8, dans lequel ladite électrodialyse inverse est l'électrodialyse inverse assistée.

10. Procédé selon la revendication 9, dans lequel le procédé comprend en outre l'application d'une tension électrique supérieure à un niveau prédéterminé à une unité d'électrodialyse inverse assistée.

11. Procédé selon l'une quelconque des revendications 8 à 10, dans lequel ladite deuxième étape comprend : a) un traitement par osmose inverse unique ou b) un traitement par osmose inverse primaire et un traitement par osmose inverse supplémentaire du rétentat dudit traitement d'osmose inverse primaire.

12. Procédé selon l'une quelconque des revendications 8 à 11, dans lequel ladite troisième étape comprend :
- l'injection du rétentat de l'osmose inverse de la seconde étape vers un premier ompartiment d'une unité d'électrodialyse inverse, dans laquelle ledit rétentat est le rétentat d'une osmose inverse unique ou le rétentat d'une osmose inverse supplémentaire,
- l'injection du perméat de l'osmose inverse de la deuxième étape vers un second compartiment d'une unité d'électrodialyse inverse, dans laquelle ledit perméat est le perméat d'une osmose inverse unique ou le perméat d'une osmose inverse supplémentaire,
dans lequel ledit rétentat et ledit perméat sont injectés en tant que flux parallèles dans ladite unité d'électrodialyse inverse, et dans laquelle la pression appliquée audit premier compartiment est inférieure à la pression appliquée audit second compartiment.

13. Procédé selon l'une quelconque des revendications 8 à 12, comprenant en outre une étape de filtration, de préférence une nanofiltration, d'eau douce ou saumâtre en amont dudit traitement d'osmose inverse unique ou primaire et/ou comprenant en outre une étape de filtration, de préférence une étape de nanofiltration, du second effluent (E2), et/ou comprenant de plus une étape de filtration, de préférence une étape de nanofiltration, de l'eau minéralisée récupérée de ladite quatrième étape.

14. Procédé selon l'une quelconque des revendications 8 à 13, comprenant en outre une étape de dérivation de ladite étape d'électrodialyse, dans laquelle au moins une partie du perméat de ladite étape d'osmose inverse est ajoutée au premier effluent (E1) de ladite étape d'électrodialyse inverse.

15. Procédé selon l'une quelconque des revendications 8 à 14, comprenant en outre une étape d'au moins un traitement supplémentaire par électrodialyse inverse du deuxième effluent (E2) de ladite étape d'électrodialyse inverse, dans laquelle ledit deuxième effluent (E2) recircule par ladite unité d'électrodialyse inverse.

16. Procédé selon l'une quelconque des revendications 8 à 15, comprenant en outre une étape de traitement de métathèse d'électrodialyse du rétentat de ladite osmose inverse de la deuxième étape, dans laquelle ledit rétentat est un rétentat de ladite osmose inverse unique ou le rétentat de ladite osmose inverse supplémentaire.
